# EUROPEAN PATENT APPLICATION

(11) **EP 4 534 911 A1**
(43) Date of publication of application: **09.04.2025**
(21) Application number: 24204802.3
(22) Date of filing: 04.10.2024
(51) Int. Cl.: F23R 3/04, F01D 25/32

(54) **GAS TURBINE ENGINE WITH ENTRAINED PARTICLE SEPARATORS**

(30) Priority: 04.10.2023 US 202318376699
(71) Applicant: RTX Corporation, Farmington, CT 06032 (US)
(72) Inventor: MULDOON, Marc J., Marlborough, 06447 (US); ACKERMANN, William K., East Hartford, 06118 (US); McCAFFREY, Michael G., Windsor, 06095 (US)
(74) Representative: Dehns

(57) **Abstract**

A particle separator (58) configured to be disposed within a turbine engine diffuser flow path is provided. The particle separator (58) includes a housing (96), a hollow cavity member (100), and a helical member (98). The housing (96) has a forward end inlet, an exterior wall (104), an aft wall (114), an interior cavity (106), and an aft exhaust passage (102) extending outwardly from the exterior wall (104) adjacent the aft wall (114). The hollow cavity member (100) has a first portion (100A), an interior region (120), and an open aft end (118). The first portion (100A) is disposed within the housing interior cavity (106) and includes perforations (122). The helical member (98) is disposed within the housing interior cavity (106). The helical member (98) forms a helical passage (126) between the housing exterior wall (104) and the first portion (100A) of the hollow cavity member (100). The helical passage (126) has a passage inlet disposed adjacent to the housing forward end inlet and a terminal end in communication with the aft exhaust passage (102).

## Description

### BACKGROUND OF THE INVENTION

### 1. Technical Field

The present disclosure relates to gas turbine engines in general and to gas turbine engine including an entrained particle separation device in particular.

### 2. Background Information

Debris entrained in air that is ingested into the core of a turbine engine negatively impacts the durability of cooled hot section components such as combustors and turbines because the debris clogs cooling passages and builds up on impingement surfaces, reducing the efficiency of heat conduction. Air contamination primarily occurs at takeoff and landing due to the higher concentration of dirt particles near the ground. Once the dirt reaches the hottest part of the engine, in the combustor and the high pressure turbine, it tends to have a very small particle size at least because it has passed through the compressor. What is needed is an improved system for removing entrained articles from air passing within a turbine engine.

### SUMMARY

According to an aspect of the present invention, a turbine engine having an axial centerline is provided that includes a compressor section, a combustor section, an outer casing, an inner diffuser case, a turbine section, and at least one particle separator. The combustor section has an annular combustor with outer and inner combustor walls and a combustion chamber disposed between the outer and inner combustor walls. The outer casing is disposed radially outside of and spaced apart from the annular combustor. The diffuser outer diameter (OD) flow path is disposed radially between the outer casing and the outer combustor wall. The inner diffuser case is disposed radially inside of and spaced apart from the annular combustor. The diffuser inner diameter (ID) flow path is disposed radially between the inner combustor wall and the inner diffuser case. The particle separator is disposed within the diffuser OD flow path or the diffuser ID flow path. The particle separator includes a housing with a forward end inlet, an interior cavity, and first and second air flow exits. The first air flow exit is configured to direct a first portion of an air flow passing through the particle separator into the combustor combustion chamber.

In any of the aspects or embodiments described above and herein, the particle separator may be configured to separate the first portion of the air flow passing through the particle separator from a second portion of the air flow passing through the particle separator, and may be configured to motivate particles entrained within the air flow such that the first portion of the air flow possesses a greater concentration of entrained particles than the second portion of the air flow.

In any of the aspects or embodiments described above and herein, the particle separator may be configured to direct the second portion of the air flow into the respective diffuser OD flow path or the diffuser ID flow path in which the particle separator is disposed.

In any of the aspects or embodiments described above and herein, the particle separator may include a hollow cavity member partially disposed within the housing interior cavity, the hollow cavity member including an aft end disposed outside of the housing, wherein the aft end of the hollow cavity member defines the second air flow exit of the particle separator.

In any of the aspects or embodiments described above and herein, the hollow cavity member may extend axially between a forward end and the aft end, and at least a portion of the hollow cavity member is perforated.

In any of the aspects or embodiments described above and herein, the particle separator may be configured to cause centrifugal forces to act on particles entrained with the air flow passing through the particle separator.

In any of the aspects or embodiments described above and herein, the housing may include an exterior wall, and the particle separator may include a helical member and a hollow cavity member, wherein a first portion of the hollow cavity member may be centrally located within the housing interior cavity, and the helical member may be disposed within the housing interior cavity between the exterior wall and the first portion of the hollow cavity member, and the helical member may form a helical passage between the housing exterior wall and the first portion of the hollow cavity member.

In any of the aspects or embodiments described above and herein, a terminal end of the helical passage may be in fluid communication with the first air flow exit.

In any of the aspects or embodiments described above and herein, a first portion of the hollow cavity member may be partially disposed within the housing interior cavity, and an aft end of the hollow cavity member may define the second air flow exit of the particle separator.

In any of the aspects or embodiments described above and herein, the hollow cavity member may include a second portion disposed outside of the housing, and the second portion may include the aft end.

In any of the aspects or embodiments described above and herein, the particle separator may include an aft exhaust passage extending outwardly from the housing and the aft exhaust passage may provide the first air flow exit.

In any of the aspects or embodiments described above and herein, the aft exhaust passage may be directly engaged with a first aperture disposed in the outer combustor wall or a second aperture disposed in the inner combustor wall.

In any of the aspects or embodiments described above and herein, the aft exhaust passage may be separated from the outer combustor wall and may be disposed to direct the first portion of the air flow through a first aperture within the outer combustor wall, or the aft exhaust passage may be separated from the inner combustor wall and may be disposed to direct the first portion of the air flow through a second aperture within the inner combustor wall.

In any of the aspects or embodiments described above and herein, the particle separator may be configured to separate the first portion of the air flow passing through the particle separator from a second portion of the air flow passing through the particle separator, and may be configured to centrifugally motivate particles entrained within the air flow such that the first portion of the air flow possesses a greater concentration of entrained particles than the second portion of the air flow, and each particle separator may be configured to electrostatically motivate the entrained particles entrained within the air flow into the first portion of the air flow.

According to another aspect of the present invention, a particle separator configured to be disposed within a turbine engine diffuser flow path is provided. The particle separator includes a housing, a hollow cavity member, and a helical member. The housing has a forward end inlet, an exterior wall that extends axially between the forward end inlet and an aft wall, an interior cavity, and an aft exhaust passage extending outwardly from the exterior wall adjacent the aft wall. The hollow cavity member has a first portion, an interior region that extends within the first portion, and an open aft end. The first portion is disposed within the housing interior cavity and includes perforations. The helical member is disposed within the housing interior cavity between the exterior wall and the first portion of the hollow cavity member. The helical member forms a helical passage between the housing exterior wall and the first portion of the hollow cavity member. The helical passage has a passage inlet disposed adjacent to the housing forward end inlet and a terminal end in communication with the aft exhaust passage.

In any of the aspects or embodiments described above and herein, the aft exhaust passage defines a first air flow exit from the particle separator, and the open aft end of the hollow cavity member defines a second air flow exit from the particle separator.

In any of the aspects or embodiments described above and herein, the hollow cavity member includes a second portion disposed outside of the housing, and the second portion includes the open aft end.

In any of the aspects or embodiments described above and herein, the particle separator may be configured to electrostatically motivate particles entrained within an air flow passing through the particle separator to exit the particle separator through the aft exhaust passage.

According to another aspect of the present invention, a method of handling particles entrained within an air flow passing through a combustor section of a turbine engine is provided. The combustor section has an annular combustor with an outer combustor wall, an inner combustor wall, and a combustion chamber disposed between the outer combustor wall and the inner combustor wall. An outer casing is disposed radially outside of and spaced apart from the annular combustor. A diffuser outer diameter (OD) flow path is disposed radially between the outer casing and the outer combustor wall. An inner diffuser case is disposed radially inside of and spaced apart from the annular combustor. A diffuser inner diameter (ID) flow path is disposed radially between the inner combustor wall and the inner diffuser case. The method includes: using a particle separator disposed within the diffuser OD flow path or the diffuser ID flow path to centrifugally separate particles entrained within the air flow and thereby form a first portion of the air flow possessing a first concentration of entrained particles and a second portion of the air flow possessing a second concentration of entrained particles, wherein the first concentration of entrained particles is greater than the second concentration of entrained particles; directing the first portion of the air flow into the combustor combustion chamber; and directing the second portion of the air flow back into the respective diffuser OD flow path or the diffuser ID flow path.

In any of the aspects or embodiments described above and herein, the method may include electrostatically motivating the entrained particles within the air flow into the first portion of the air flow.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine.
FIG. 2 is a diagrammatic partial view of a gas turbine engine embodiment.
FIG. 3 is a diagrammatic sectioned partial view of a gas turbine engine embodiment.
FIG. 4 is a diagrammatic sectioned partial view of a combustor wall assembly.
FIG. 5 is a diagrammatic sectioned view of a present disclosure particle separator embodiment.
FIG. 6 is a diagrammatic sectioned view of a present disclosure particle separator embodiment.
FIG. 7 is a diagrammatic partial view of a gas turbine engine embodiment.
FIG. 8 is a diagrammatic partial view of a gas turbine engine embodiment.

### DETAILED DESCRIPTION

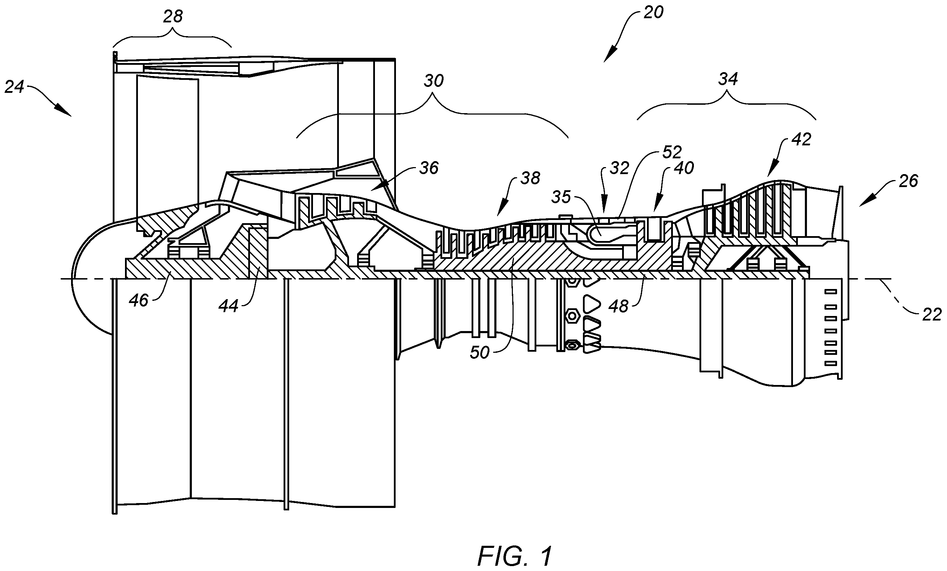

FIG. 1 shows a partially sectioned diagrammatic view of a geared gas turbine engine 20. The gas turbine engine 20 extends along an axial centerline 22 between an upstream air flow inlet 24 and a downstream air flow exhaust 26. The gas turbine engine 20 includes a fan section 28, a compressor section 30, a combustor section 32, and a turbine section 34. The combustor section 32 includes a combustor 35. The compressor section 30 includes a low pressure compressor (LPC) 36 and a high pressure compressor (HPC) 38. The turbine section 34 includes a high pressure turbine (HPT) 40 and a low pressure turbine (LPT) 42. The engine sections are arranged sequentially along the centerline 22. The fan section 28 is connected to a geared architecture 44, for example, through a fan shaft 46. The geared architecture 44 and the LPC 36 are connected to and driven by the LPT 42 through a low speed shaft 48. The HPC 38 is connected to and driven by the HPT 40 through a high speed shaft 50. The terms "forward", "leading", "aft, "trailing" are used herein to indicate the relative position of a component or surface. As core gas air passes through the engine 20, a "leading edge" of a stator vane or rotor blade encounters core gas air before the "trailing edge" of the same. In a conventional axial engine such as that shown in FIG. 1, the fan section is "forward" of the compressor section and the turbine section is "aft" of the compressor section. The terms "inner radial" and "outer radial" refer to relative radial positions from the engine centerline. An inner radial component or path is disposed radially closer to the engine centerline than an outer radial component or path. The gas turbine engine diagrammatically shown is an example provided to facilitate the description herein. The present disclosure is not limited to any particular gas turbine engine configuration.

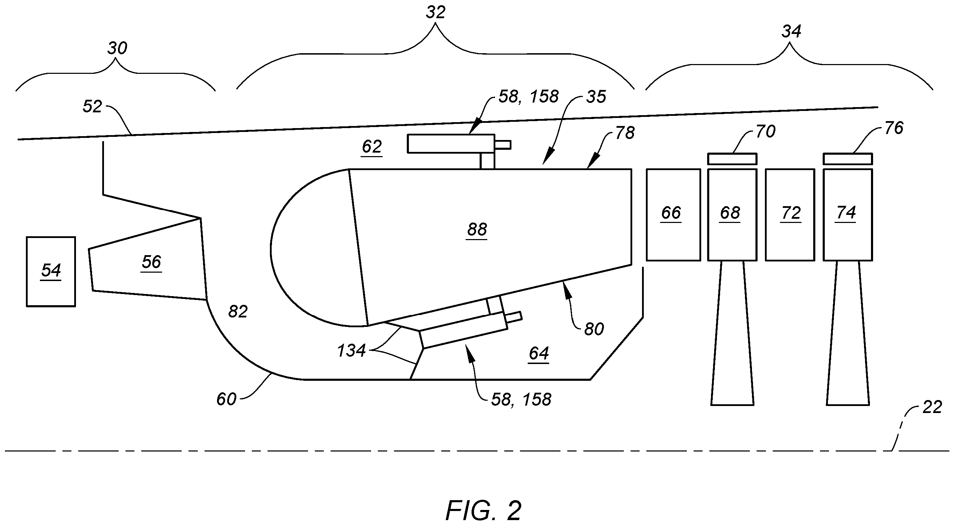

FIG. 2 is a diagrammatic partial view of a gas turbine engine embodiment according to aspects of the present disclosure. The engine shown in FIG. 2 includes a compressor section 30, a combustor section 32, and a portion of an HPT 40. An outer casing 52 is disposed radially outside of the compressor section 30, the combustor section 32, and the turbine section 34. The compressor section 30 includes a compressor stator vane stage 54 and a compressor discharge 56. The combustor section 32 includes a combustor 35, a plurality of particle separators 58, 158, and an inner diffuser case 60. A diffuser outer diameter (OD) flow path 62 is disposed radially between the combustor 35 and the outer casing 52. A diffuser inner diameter (ID) flow path 64 is disposed radially between the combustor 35 and the inner diffuser case 60. The embodiment shown diagrammatically in FIG. 2 illustrates particle separators 58, 158 disposed within the diffuser OD flow path 62 and the diffuser ID flow path 64. The present disclosure does not require particle separators 58, 158 disposed in both the diffuser OD flow path 62 and the diffuser ID flow path 64. The turbine section 34 includes a first HPT stator vane stage 66, a first HPT rotor stage 68, a first HPT rotor stage blade outer air seal (BOAS) 70, a second HPT stator vane stage 72, a second HPT rotor stage 74, and a second HPT rotor stage BOAS 76.

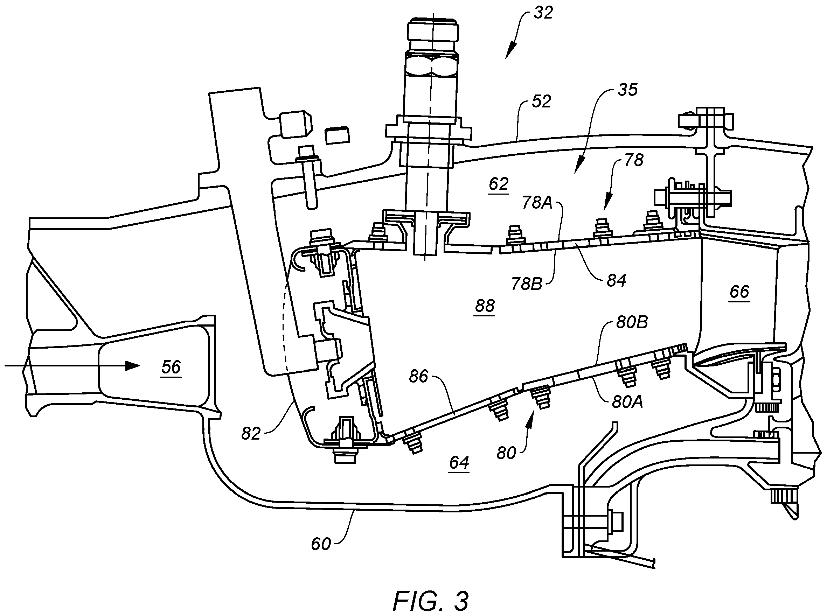

FIG. 3 diagrammatically illustrates a non-limiting example of a combustor 35 having an outer combustor wall assembly 78, an inner combustor wall assembly 80, and a bulkhead assembly 82. The outer combustor wall assembly 78 includes an outer support shell 78A that supports liner panels 78B mounted thereto. The liner panels 78B mounted on the outer support shell 78A form a cavity 84 therebetween. In similar fashion, the inner combustor wall assembly 80 includes an inner support shell 80A that supports liner panels 80B mounted thereto. The liner panels 80B mounted on the inner support shell 80A form a cavity 86 therebetween. The outer combustor wall assembly 78 and the inner combustor wall assembly 80 are spaced apart from one another to define an annular combustion chamber 88 therebetween, with the liner panels forming a portion of the interior boundary of the combustion chamber 88. The bulkhead assembly 82 includes fuel nozzles circumferentially distributed around the annular combustor 35. The bulkhead assembly 82 may be attached to the inner and outer combustor wall assemblies 78, 80.

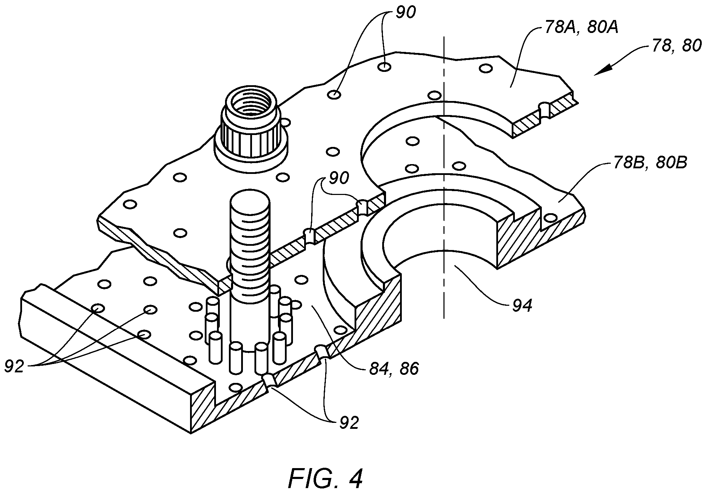

FIG. 4 diagrammatically illustrates a partial view of a generic support shell 78A, 80A, liner panel 78B, 80B, and a cavity 84, 86 disposed therebetween. The support shell 78A, 80A and liner panel 78B, 80B are representative of an outer or inner combustor wall assembly 78, 80. As can be seen in FIG. 4, the support shell 78A, 80A includes a plurality of apertures 90 configured to allow cooling air therethrough, and the liner panel 78B, 80B includes a plurality of apertures 92 configured to allow cooling air therethrough. As can also be seen in FIG. 4, the combustor wall assembly 78, 80 may include a plurality of dilution apertures 94 that provide an air passage through the combustor wall assembly 78, 80 to permit air to enter the combustion chamber 88 through the combustor wall assembly 78, 80 (e.g., from the diffuser OD path 62 or the diffuser ID path 64 as will be detailed herein). The dilution apertures 94 typically have a diameter substantially larger than the cooling hole apertures 90, 92 disposed within the support shell 78A, 80A or liner panel 78B, 80B. A combustor 35 may include some dilution apertures 94 of a first diameter and other dilution apertures 94 of a second diameter different from the first diameter. The combustor 35 shown in FIG. 3 and the generic combustor wall assembly 78, 80 shown in FIG. 4 are examples used to illustrate the present disclosure and the present disclosure is not limited thereto.

As stated above, debris (e.g., particles) entrained in air that is ingested into the core of a turbine engine 20 may negatively impact the durability of components within the combustor section 32 and the turbine section 34 because the debris can clog cooling passages and build upon impingement surfaces, thereby reducing the efficiency of heat transfer. Entrained particles that reach the hot sections of the turbine engine 20 tend to have a very small particle sizes because they have passed through the compressor section 30.

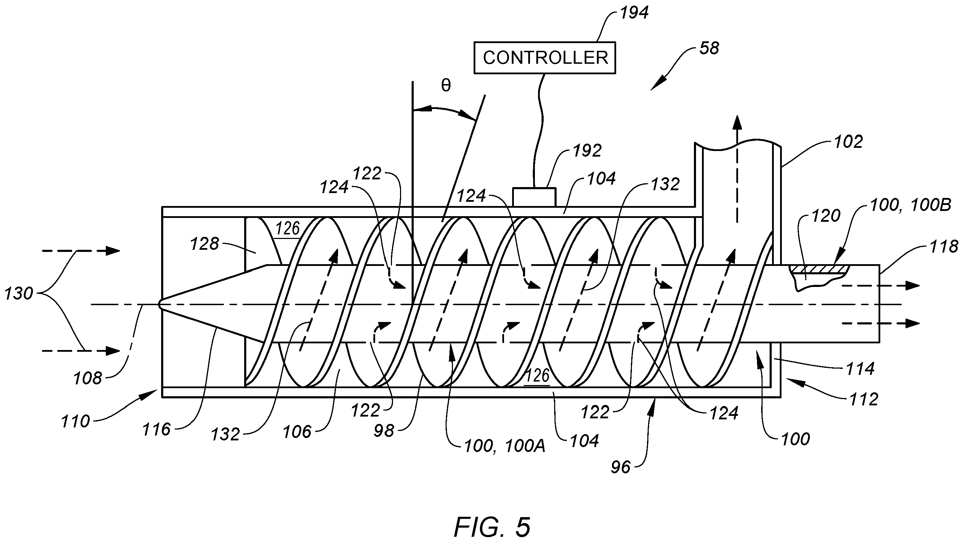

The present disclosure utilizes particle separators 58, 158 disposed within the diffuser ID flow path 64 and/or the diffuser OD flow path 62. FIG. 5 diagrammatically illustrates an example of a particle separator 58. The particle separator 58 includes a housing 96, a helical member 98, a cavity member 100, and an aft exhaust passage 102. The housing 96 is defined by an exterior wall 104 that encloses an interior cavity 106. The housing 96 extends along a central axis 108 between a forward end 110 and an aft end 112. In the example shown in FIG. 5, the housing 96 has a cylindrical configuration but the present disclosure is not limited thereto; e.g., the housing 96 may have a tapered configuration wherein the cross-sectional area at the forward end 110 is greater than the cross-sectional area at the aft end 112. The forward end 110 of the housing 96 is open (forming a forward end inlet) and the aft end 112 of the housing 96 may be closed by an aft wall 114. The aft exhaust passage 102 extends laterally outward from the housing 96 adjacent the aft end 112 of the housing 96, and it provides a first air flow exit from the particle separator 58. In the example shown diagrammatically in FIG. 5, the aft exhaust passage 102 is shown extending in a direction that is substantially perpendicular to the central axis 108 of the housing 96. The present disclosure is not limited to this aft exhaust passage 102 orientation; e.g., the aft exhaust passage 102 may extend out at an angle that coincides with the helical passage angle ("θ") as detailed herein. In some embodiments, a distal end of the aft exhaust passage 102 may be configured to engage with an aperture within the outer or inner combustor wall assembly 78, 80; e.g., configured to engage with a dilution aperture 94. In some embodiments, an aft exhaust passage 102 may be configured such that the aft exhaust passage 102 is not directly engaged with an aperture (e.g., a dilution aperture 94) within the outer or inner combustor wall assembly 78, 80 but rather is disposed to direct air flow into the aforesaid aperture. In this manner, the inner or outer combustor wall assembly 78, 80 and the aft exhaust passage 102 are able to accommodate relative movement (e.g., vibration, differential thermal growth, and the like) therebetween more readily.

Still referring to FIG. 5, the cavity member 100 extends along the central axis 108 between a forward end 116 and an aft end 118. The forward end 116 of the cavity member 100 may change in diameter forward to aft (e.g., a tapered configuration as shown, or an arcuate configuration such as parti-spherical, parti-ellipsoidal, or the like) but is not limited to any particular configuration. The cavity member 100 is hollow (e.g., having an interior region 120) and the aft end 118 is open (forming a second air flow exit from the particle separator 58). The cavity member 100 is configured (e.g., via perforations 122 or the like) to receive air flow (shown as arrows 124) passing through the helical passage 126 as will be detailed herein. The cavity member 100 shown in FIG. 5 extends beyond the aft end 112 of the housing 96; e.g., a first portion 100A of the cavity member 100 is disposed within the interior cavity 106 of the housing 96 and a second portion 100B of the cavity member 100 is disposed outside of the housing 96. The present disclosure does not require a second portion 100B that extends outside the housing 96. The helical member 98 is disposed within the interior cavity 106 of the housing 96, disposed between the exterior wall 104 of the housing 96 and the cavity member 100. The helical member 98 defines a helical passage 126 within the interior cavity 106 of the housing 96 that begins at an open end 128 adjacent the forward end 110 of the housing 96 and terminates at the aft exhaust passage 102. In FIG. 5, the open end 128 of the helical passage 126 is disposed slightly aft of the forward end 116 of the cavity member 100. In those embodiments wherein the forward end 116 of the cavity member 100 has an increasing diameter configuration (e.g., tapered, spherical, ellipsoidal, or the like), the forward end 116 of the cavity member 100 facilitates air flow entry into the helical passage 126. The helical member 98 may be sealed with the exterior wall 104 of the housing 96 and the cavity member 100 to ensure all air flow (shown as arrows 130) entering the helical passage 126 either travels throughout the helical passage 126 (shown as arrows 132) and exits the aft exhaust passage 102 or exits into the cavity member 100. The particle separator 58 embodiment shown in FIG. 5 includes approximately eight helical turns, each disposed at an angle theta ("θ"). The present disclosure particle separator 58 is not limited to any particular number of turns, or any particular helical turn angle. Referring to FIG. 2, in some embodiments deflection panels 134 may be disposed relative to a particle separator 58 to direct diffuser air flow into the particle separator 58.

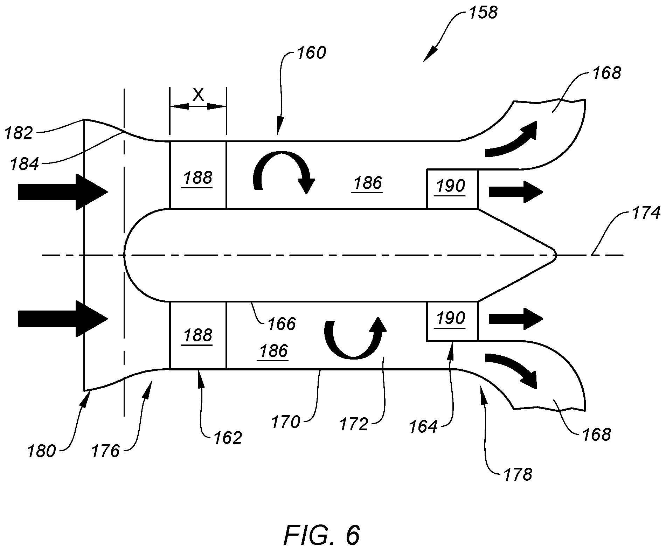

Another example of a particle separator is shown in FIG. 6. The particle separator 158 includes a housing 160, a first swirl vane stage 162, a second swirl vane stage 164, a central body 166, and an aft exhaust passage 168. The housing 160 includes an exterior wall 170 that defines a housing interior cavity 172 and extends along a central axis 174 between a forward end 176 and an aft end 178. In the example shown in FIG. 6, the housing 160 has a cylindrical configuration but the present disclosure is not limited thereto. The housing 160 has a cross-sectional area (e.g., in a plane perpendicular to the central axis 174) through which air flow travels.

In some embodiments, the particle separator 158 may include an inlet section 180. The housing forward end 176 is open to the inlet section 180. The inlet section 180 has a forward end 182 and an aft end 184. The inlet section aft end 184 is engaged with the housing forward end 176. The inlet section forward end 182 may have a greater cross-sectional area than the inlet section aft end 184; i.e., the inlet section 180 may converge between its forward and aft ends 182, 184. In those embodiments that include an inlet section 180, the inlet section forward end 182 may conform with the respective diffuser OD flow path 62 or the diffuser ID flow path 64 to facilitate directing flow into the particle separator 158.

The central body 166 is disposed within the housing interior cavity 172 and extends axially between a forward end and an aft end. The central body 166 creates an annular region 186 disposed between the central body 166 and the housing exterior wall 170. The central body 166 forward end may be arcuately shaped and the aft end may have a tapered configuration.

The first swirl vane stage 162 is disposed adjacent to the forward end 176 of the housing 160. In the embodiment diagrammatically shown in FIG. 6, the first swirl vane stage 162 is disposed just aft of the forward end of the central body 166. The first swirl vane stage 162 may include a plurality of vanes 188 configured to cause a generally axially traveling air flow entering the first swirl vane stage 162 to swirl (e.g., travel as a vortex rotating in a counterclockwise direction for example) as it exits the first swirl vane stage 162 and travels axially within the particle separator 158. The vanes 188 extend radially between the central body 166 and the housing exterior wall 170. Hence, all air flow entering the particle separator must pass through the first swirl vane stage 162. The first swirl vane stage 162 extends an axial distance "X".

The entrance to the aft exhaust passage 168 is disposed adjacent the aft end 178 of the housing 160 and is radially separated from the central body 166 by the second swirl vane stage 164; i.e., the entrance to the aft exhaust passage 168 is disposed radially outside of the second swirl vane stage 164. The aft exhaust passage 168 extends laterally outward from the housing 160 and provides an air flow exit from the particle separator 158. In some embodiments, aft exhaust passage 168 may be configured as a volute to gather exhaust flow toward a common direction at a distal end. In some embodiments, a distal end of the aft exhaust passage 168 may be configured to engage with an aperture (e.g., a dilution aperture 94 - see FIG. 4) within the outer or inner combustor wall assembly 78, 80 of the combustor 35, or may be configured so that it is not directly engaged with such an aperture but rather is disposed to direct air flow into the aforesaid aperture. In this manner, the inner or outer combustor wall assembly 78, 80 and the aft exhaust passage 168 are able to accommodate relative movement (e.g., vibration, differential thermal growth, and the like) therebetween more readily.

The second swirl vane stage 164 extends between the central body 166 and the aft exhaust passage 168 and provides an air flow exit from the particle separator 158. The second swirl vane stage 164 includes a plurality of vanes 190 configured to counter the swirl imparted to the air flow by the first swirl vane stage 162; i.e., the vanes 190 within the second swirl vane stage 164 are configured to change the direction of the air flow passing through the second swirl vane stage 164 from the rotational swirl (e.g., counterclockwise) that enters the second swirl vane stage 164 to a generally axial direction flow that exits the second swirl vane stage 164. The exit of the second swirl vane stage 164 is adjacent the tapered aft end of the central body 166. Hence and will be described in greater detail herein, the second swirl vane stage 164 disposed radially inside of the aft exhaust passage 168 provides an air flow exit for "clean" air (i.e., containing less particulate matter), and the aft exhaust passage 168 disposed radially outside of the second swirl vane stage 164 provides an air flow exit for "dirty" air (i.e., containing more particulate matter).

The interior cavity 172 of the housing 160 between the first swirl vane stage 162 and the second swirl vane stage 164 may be open (e.g., no structural obstructions) so as to not impede the swirling movement of air flow therethrough (e.g., movement that includes a circumferential component and an axial component) and to facilitate the outward radial movement of particles entrained within the air flow (as a result of centrifugal forces acting on the particles). This unobstructed swirl may progress in the mode of a free vortex (e.g., with constant angular momentum) such that the flow near the inner wall circumnavigates a much larger total angular travel than the flow near the outer wall. Free vortex flow is known to propagate with insignificant pressure loss.

Particles entrained in air very often possess a static charge (positive or negative charge). The aforesaid static charge may result from contact between the particles and other objects; e.g., other particles and/or surfaces. The compressing work performed on the air by the compressor section 30 upstream of the combustor section 32 may increase the probability of entrained particles possessing a static charge. The compressing work may also decrease the percentage of particles having a relatively larger diameter and increase the percentage of particles having a relatively smaller diameter. In some embodiments, the particle separator 58, 158 may be configured such that a portion of the particle separator 58, 158 possesses an electrostatic charge continuously, intermittently, or selectively. The present disclosure is not limited to any particular mechanism 192 (see FIG. 5) for producing an electrostatic charge on a portion of the particle separator 58. The electrostatically charged portion of the particle separator 58, 158 may facilitate particle separation by attracting the particles in a predetermined direction thereby increasing the concentration of particles within a first portion of the air flow traveling within the separator 58, 158 and decreasing the concentration of particles within a second portion of the air flow traveling within the separator 58, 158. For example, an embodiment of the present disclosure particle separator 58, 158 may be configured such that the housing exterior wall 104, 170 possesses an electrostatic charge (e.g., a positive electrical charge) that is opposite the static charge (e.g., a negative electrical charge) possessed by entrained particles. The potential difference between the aforesaid charges motivates the particles toward the housing exterior wall 104, 170. The particle separator housing 96, 160 is a non-limiting example of a portion of the separator 58, 158 that may possess an electrostatic charge. The present disclosure is not limited to any particular mechanism 192 for producing the electrostatic charge; e.g., an energy source that provides an electrical bias, voltage potential, or an electromagnetic field source, or the like. In those embodiments that include electrostatic enhanced separation, the mechanism 192 for producing the electrostatic charge may be in communication with a controller 194 (e.g., see FIG. 5) configured to control the application of the electrostatic charge. For example, the mechanism 192 may be controlled between an "on mode" wherein the portion is electrostatically charged and an "off mode" wherein the portion is not electrostatically charged to prevent particle accumulation on the charged portion. The controller 194 may be configured to control and/or receive signals from system components (e.g., mechanism 192) to perform the functions described herein. The controller 194 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the system to accomplish the same algorithmically and/or coordination of system components. The controller 194 includes and/or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. Communications between the controller 194 and other system components may be via a hardwire connection or via a wireless connection.

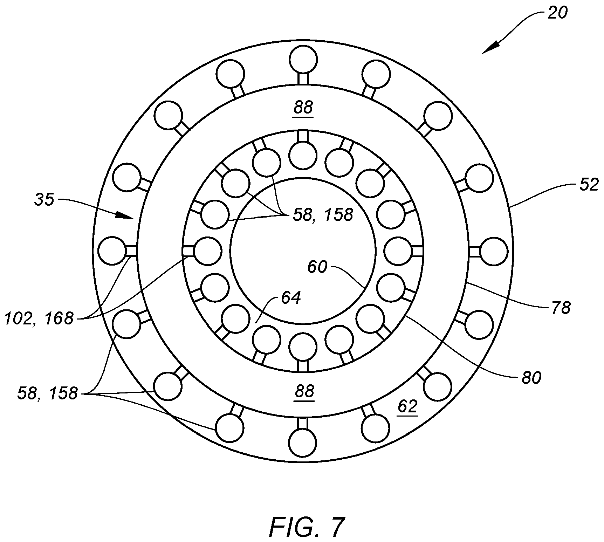

FIG. 7 diagrammatically illustrates a view directed along the axial centerline 22 (see FIG. 1) of the turbine engine 20, diagrammatically illustrating the annular relationship of the outer casing 52, the diffuser OD flow path 62, the combustor 35, the diffuser ID flow path 64, and the inner diffuser case 60. FIG. 7 illustrates a plurality of particle separators 58, 158 disposed within the diffuser OD flow path 62 and in the diffuser ID flow path, circumferentially spaced apart from one another in the respective flow path. FIG. 7 illustrates the particle separators 58, 158 in the diffuser OD flow path 62 and the diffuser ID flow path 64 uniformly spaced apart from one another around the circumference. The present disclosure is not limited to having uniform circumferential particle separator 58, 158 spacing. For example, if in a given application the concentration of entrained particles is greater in a first circumferential region than in a second circumferential region, the separator 58, 158 circumferential positioning may be adjusted to deploy particle separators 58, 158 closer to one another in the first region than in the second region. The present disclosure is not limited to disposing any particular number of particle separators 58, 158 in either the diffuser OD flow path 62 or the diffuser ID flow path 64. In some applications, particle separators 58, 158 may be disposed in only the diffuser OD flow path 62 or the diffuser ID flow path 64. FIG. 7 illustrates an embodiment wherein the same number of particle separators 58, 158 are disposed in the diffuser OD flow path 62 and in the diffuser ID flow path 64. The present disclosure is not limited to this embodiment; e.g., in some embodiments the number of particle separators 58, 158 disposed in the diffuser OD flow path 62 may be different than the number of particle separators 58, 158 disposed in the diffuser ID flow path 64. In the diagrammatic representation shown in FIG. 7, the respective separator aft exhaust passages 102, 168 are shown engaged with the outer or inner combustor wall assembly 78, 80. As stated above, the present disclosure is not limited thereto and the respective aft exhaust passages 102, 168 alternatively may not be directly engaged with the outer or inner combustor wall assembly 78, 80.

In the operation of a turbine engine 20 (e.g., see FIG. 1), air is drawn into the turbine engine 20 through an air flow inlet 24 and is typically directed through a fan section 28. The air flow exiting the fan section 28 enters the compressor section 30 where it is worked to a higher pressure and temperature. The compressed air exits the compressor section 30 and enters the combustor section 32. In many instances, the air that is worked within the compressor section 30 is unfiltered ambient air that contains entrained particles. Even if the air worked within the compressor section 30 has been filtered upstream, no filtration process (i.e., particle removement process) is perfect - some amount of particulate matter will remain entrained. As indicated above, it is understood that particles entrained within the air worked within the compressor section 30 tend to decrease in size. The decreased size particles are understood to have a greater propensity to adhere and build up on component surfaces. In some instances, built-up particulate matter upstream of the combustor 35 can release and once again become entrained particulate matter.

Entrained particulate matter can be particularly problematic in the combustor section 32 and the turbine section 34 where component cooling is required. In many applications, engine cooling schemes use relatively small diameter cooling apertures to produce impingement cooling and/or to establish cooling air boundary layer flow adjacent to a component surface, or the like. In these instances, the diameter of the cooling aperture may be directly related to the desired cooling effect. In some instances, the diameter of the cooling aperture is limited by the potential for particulate fouling; i.e., a minimum diameter of a cooling aperture is selected to avoid fouling and a consequent cooling deficit.

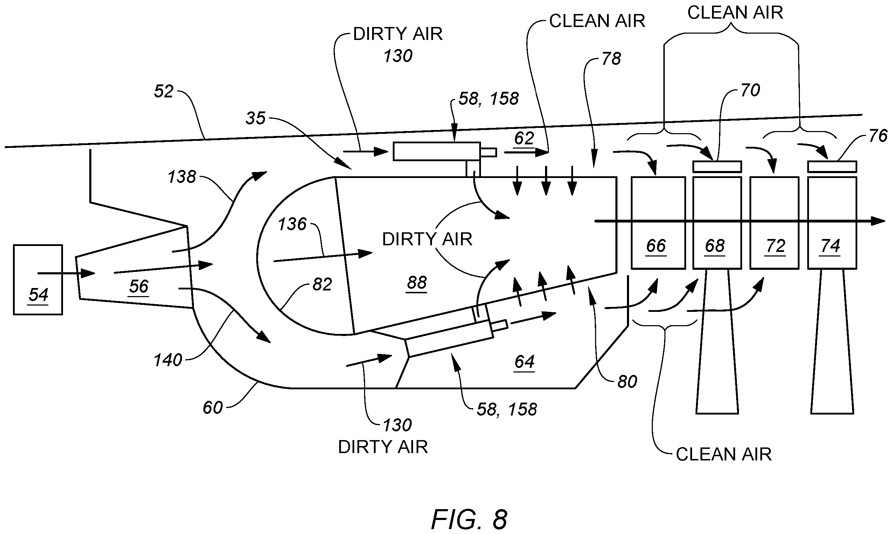

The present disclosure provides a novel and unobvious system and method for removing entrained particles upstream of the engine components where particulate fouling is problematic; i.e., engine hot section components that utilize cooling air. FIG. 8 diagrammatically illustrates air flow into, within, and exiting the combustor section 32 into the turbine section 34. FIG. 8 diagrammatically illustrates present disclosure particle separators 58, 158 disposed within both the diffuser OD flow path 62 and the diffuser ID flow path 64. As indicated above, the present disclosure does not require disclosure particle separators 58, 158 disposed in both the diffuser OD flow path 62 and the diffuser ID flow path 64. The air flow exiting the compressor discharge 56 enters the combustor section 32 as combustor primary flow 136, diffuser OD flow 138, and diffuser ID flow 140. The combustor primary flow 136 passes through the combustor bulkhead assembly 82 and is mixed with fuel and the mixture combusted. The air not utilized within combustion and the combustion products (collectively referred to hereinafter as "core gas flow") enters the turbine section 34 via the core gas flow path and provides motive force to drive the turbine section 34. The diffuser OD flow 138 enters the diffuser OD flow path 62 disposed radially outside of the combustor 35 and the diffuser ID flow 140 enters the diffuser ID flow path 64 radially inside of the combustor 35. The air entering the combustor 35, the diffuser OD flow path 62, and the diffuser ID flow path 64 very likely contain entrained particulate matter and is referred to hereinafter as "dirty air". Depending on the present disclosure configuration, all or a portion of the dirty air entering the diffuser OD flow path 62 will enter the particle separators 58, 158 disposed within the diffuser OD flow path 62, and all or a portion of the dirty air entering the diffuser ID flow path 64 will enter the particle separators 58, 158 disposed within the diffuser ID flow path 64.

Dirty air entering the particle separator 58 embodiment shown in FIG. 5 enters via the open forward end 110 of the particle separator 58 and is directed into the helical passage 126 disposed within the interior cavity 106 of the housing 96. As the dirty air passes through the helical passage 126, centrifugal forces act on any particles entrained within the dirty air. The greater mass particles are moved radially outward (i.e., toward the separator exterior wall 104) by the centrifugal forces as they pass through the helical passage 126. As a result, the concentration of particles within a portion of the air adjacent the exterior wall 104 will increase and the concentration of particles within a portion of the air adjacent the cavity member 100 will decrease. The portion of the air adjacent the cavity member 100 will enter the cavity member 100 (e.g., via perforations 122) and will travel axially therethrough until it exits the particle separator 58. The portion of the air adjacent the exterior wall 104 will continue to travel through the helical passage 126 until it reaches the aft exhaust passage 102.

Dirty air entering the particle separator embodiment shown in FIG. 6 enters via the forward end of the particle separator 158 (or via the inlet section 180 if included) and is directed into the first swirl vane stage 162 disposed within the interior cavity 172 of the housing 160. The vanes 188 of the first swirl vane stage 162 cause the dirty air traveling in a generally axial direction to swirl (e.g., travel as a vortex) within the housing 160 as it exits the first swirl vane stage 162. Within the swirling air exiting the first swirl vane stage 162, centrifugal forces act on any particles entrained within the dirty air. The greater mass particles are moved radially outward (i.e., toward the housing exterior wall 170) by the centrifugal forces. As a result, the concentration of particles within a portion of the air adjacent the exterior wall 170 will increase and the concentration of particles within a portion of the air adjacent the central body 166 will decrease. The portion of the air flow adjacent the central body 166 ("clean air") will enter the second swirl vane stage 164. As that portion of air flow enters the second swirl vane stage 164, the second swirl vane stage 164 redirects the air flow into a substantially axially directed flow that exits the particle separator 158. The portion of the air adjacent the exterior wall 170 ("dirty air") will enter the aft exhaust passage 168.

In those embodiments wherein a portion of a particle separator 58, 158 is configured to possess an electrostatic charge, the particulate matter entrained within the dirty air enters the interior cavity 106, 172 of the particle separator 58, 158 and the electrostatically charged portion of the particle separator 58, 158 (e.g., the housing exterior wall 104, 170) attracts the oppositely charged entrained particles and provides a motive force that moves the entrained particles radially outward (i.e., toward the exterior wall 104, 170). As a result, the concentration of particles within a portion of the air adjacent the exterior wall 104, 170 will increase and the concentration of particles within a portion of the air adjacent the cavity member 100 (or central body 166) will decrease. Hence, the electrostatic enhancement facilitates particle separation.

The "dirty air" entering the aft exhaust passage 102, 168 is directed into the combustion chamber 88 via a relatively large diameter aperture; e.g., a dilution aperture 94 (see FIG. 4). As stated above, in some embodiments a particle separator 58, 158 aft exhaust passage 102, 168 may be directly engaged with an aperture (e.g., a dilution aperture 94) within a combustor wall assembly 78, 80, or alternatively an aft exhaust passage 102, 168 may be indirectly engaged with a combustor wall assembly aperture; i.e., oriented to direct the dirty air through the aforesaid aperture. The dirty air that has entered the combustion chamber 88 subsequently becomes part of the core gas flow that provides motive force to the turbine section 34. The core gas flow path through in and aft of the turbine section 34 is typically designed to accommodate core gas flow (including its combustion products) and is therefore configured to accommodate the dirty air separated by the particle separators 58.

The portion of the air (i.e., the "clean air") that enters the cavity member 100 (see FIG. 5; or that passes through the second swirl vane stage 164 - see FIG. 6) is understood to contain substantially less particulate matter than the dirty air. The clean air exiting the cavity member 100 (see FIG. 5; or exits via the second swirl vane stage 164 - see FIG. 6) may be used for a variety of different purposes. For example, as detailed above it is known to use cooling air to cool a combustor wall assembly 78, 80. Referring to FIG. 4, the cooling air may pass through cooling apertures 90, 92 disposed within the support shell 78A, 80A and/or the combustor liner panels 78B, 80B. In many instances, combustor wall assembly cooling apertures 90, 92 are relatively small in diameter and susceptible to particulate fouling. The clean air produced by the present disclosure particle separators 58, 158 decreases the potential for fouling and therefore increases the likelihood of successful combustor wall assembly cooling over a greater period of time.

Clean air exiting the particle separators 58, 158 within the diffuser OD flow path 62 may be used to cool the HPT components including, but not limited to, the first HPT stator vane stage 66, the first HPT rotor BOAS 70, the second HPT stator vane stage 72, the second HPT rotor BOAS 76, and the like (see FIGS. 2 and 8). Clean air exiting the particle separators 58, 158 within the diffuser ID flow path 64 may be used to cool the HPT components including, but not limited to, the first HPT stator vane stage 66, the first HPT rotor stage 68, and the second HPT stator vane stage 72 (see FIGS. 2 and 8). The clean air produced by the present disclosure particle separators 58, 158 decreases the potential for fouling and therefore increases the likelihood of successful HPT component cooling over a greater period of time.

Embodiments of the present disclosure particle separators 58, 158 that are configured to separate entrained particles both centrifugally and electrostatically are understood to provide a substantial improvement in particle separation. As stated above, the work performed on the air passing through the compressor is understood to increase the percentage of the entrained particles having a relatively smaller diameter and decrease the percentage of entrained particles having a relatively larger diameter. The present disclosure particle separator 58, 158 embodiments that employ a combination of centrifugal and electrostatic separation are understood to be effective at removing both larger entrained particles (more susceptible to centrifugal forces) and smaller particles (less susceptible to centrifugal forces, but more apt to have a particular electrostatic charge). It is understood that not all entrained particles will have the same electrostatic charge. It is understood further that "small" particles (i.e., those having a diameter / hydraulic diameter less than fifty microns - 50µm) typically possess a negative charge and "large" particles (i.e., those having a diameter / hydraulic diameter greater than fifty microns - 50µm) typically possess a positive charge. Present disclosure particle separator 58, 158 embodiments that include electrostatic separation may be configured to have a portion of the particle separator 58, 158 (e.g., the housing exterior wall 104, 168) electrostatically charged (e.g., a positive electrostatic charge) to attract smaller entrained particles. In this manner, embodiments of the present disclosure are understood to effectively remove entrained particles having a range of diameters in the environment downstream of the compressor bulkhead 82, thereby producing "clean air" immediately upstream of hot section cooling applications that are susceptible of particulate fouling. In some applications, the present disclosure particle separators 58, 158 may make it possible to utilize decreased diameter cooling holes (otherwise not practical due to particulate fouling potential) that may provide cooling benefits.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A turbine engine having an axial centerline, the turbine engine comprising:
a compressor section (30);
a combustor section (32) having an annular combustor (35) with an outer combustor wall (78), an inner combustor wall (80), and a combustion chamber (88) disposed between the outer combustor wall (78) and the inner combustor wall (80);
an outer casing (52) disposed radially outside of and spaced apart from the annular combustor (35), wherein a diffuser outer diameter flow path (62) is disposed radially between the outer casing (52) and the outer combustor wall (78);
an inner diffuser case (60) disposed radially inside of and spaced apart from the annular combustor (35), wherein a diffuser inner diameter flow path (64) is disposed radially between the inner combustor wall (80) and the inner diffuser case (60);
a turbine section (34); and
at least one particle separator (58) disposed within the diffuser outer diameter flow path (62) or the diffuser inner diameter flow path (64), wherein the particle separator (58) includes a housing (96) with a forward end inlet, an interior cavity (106), a first air flow exit, and a second air flow exit, wherein the first air flow exit is configured to direct a first portion of an air flow passing through the particle separator (58) into the combustion chamber (88).

2. The turbine engine of claim 1, wherein the particle separator (58) is configured to separate the first portion of the air flow passing through the particle separator (58) from a second portion of the air flow passing through the particle separator (58), and is configured to motivate particles entrained within the air flow such that the first portion of the air flow possesses a greater concentration of entrained particles than the second portion of the air flow.

3. The turbine engine of claim 2, wherein the particle separator (58) is configured to direct the second portion of the air flow into the respective diffuser outer diameter flow path (62) or the diffuser inner diameter flow path (64) in which the particle separator (58) is disposed.

4. The turbine engine of any preceding claim, wherein the particle separator (58) further includes a hollow cavity member (100) partially disposed within the housing interior cavity (106), the hollow cavity member (100) including an aft end (118) disposed outside of the housing (96), wherein the aft end (118) of the hollow cavity member (100) defines the second air flow exit of the particle separator (58).

5. The turbine engine of claim 4, wherein the hollow cavity member (100) extends axially between a forward end (116) and the aft end (118), and at least a portion of the hollow cavity member (100) is perforated.

6. The turbine engine of any preceding claim, wherein the particle separator (58) is configured to cause centrifugal forces to act on particles entrained with the air flow passing through the particle separator (58).

7. The turbine engine of any preceding claim, wherein the housing (96) includes an exterior wall (104), and the particle separator (58) includes a helical member (98) and a or the hollow cavity member (100), wherein a first portion (100A) of the hollow cavity member (100) is centrally located within the housing interior cavity (106), and wherein the helical member (98) is disposed within the housing interior cavity (106) between the exterior wall (104) and the first portion (100A) of the hollow cavity member (100), and the helical member (98) forms a helical passage (126) between the housing exterior wall (104) and the first portion (100A) of the hollow cavity member (100).

8. The turbine engine of claim 7, wherein a terminal end of the helical passage (126) is in fluid communication with the first air flow exit.

9. The turbine engine of claim 7 or 8, wherein the first portion (100A) of the hollow cavity member (100) is partially disposed within the housing interior cavity (106), and an aft end (118) of the hollow cavity member (100) defines the second air flow exit of the particle separator (58), optionally wherein the hollow cavity member (100) includes a second portion (100B) disposed outside of the housing (96), and the second portion (100B) includes the aft end (118).

10. The turbine engine of any preceding claim, wherein the particle separator (58) includes an aft exhaust passage (102) extending outwardly from the housing (96) and the aft exhaust passage (102) provides the first air flow exit.

11. The turbine engine of claim 10, wherein the aft exhaust passage (102) is directly engaged with a first aperture (94) disposed in the outer combustor wall (78) or a second aperture (94) disposed in the inner combustor wall (80).

12. The turbine engine of claim 10, wherein the aft exhaust passage (102) is separated from the outer combustor wall (78) and is disposed to direct the first portion of the air flow through a first aperture (94) within the outer combustor wall (78), or the aft exhaust passage (102) is separated from the inner combustor wall (80) and is disposed to direct the first portion of the air flow through a second aperture (94) within the inner combustor wall (80).

13. The turbine engine of any preceding claim, wherein the particle separator (58) is configured to separate the first portion of the air flow passing through the particle separator (58) from a second portion of the air flow passing through the particle separator (58), and is configured to centrifugally motivate particles entrained within the air flow such that the first portion of the air flow possesses a greater concentration of entrained particles than the second portion (100B) of the air flow; and
wherein the particle separator (58) is configured to electrostatically motivate the entrained particles entrained within the air flow into the first portion of the air flow.

14. A particle separator configured to be disposed within a turbine engine diffuser flow path, the particle separator (58) comprising:
a housing (96) having a forward end inlet, an exterior wall (104) that extends axially between the forward end inlet and an aft wall (114), an interior cavity (106), and an aft exhaust passage (102) extending outwardly from the exterior wall (104) adjacent the aft wall (114);
a hollow cavity member (100) having a first portion (100A), an interior region (120) that extends within the first portion (100A), and an open aft end (118), wherein the first portion (100A) is disposed within the housing interior cavity (106) and includes perforations (122); and
a helical member (98) disposed within the housing interior cavity (106) between the exterior wall (104) and the first portion (100A) of the hollow cavity member (100), wherein the helical member (98) forms a helical passage (126) between the housing exterior wall (104) and the first portion (100A) of the hollow cavity member (100), the helical passage (126) having a passage inlet disposed adjacent to the housing forward end inlet and a terminal end in communication with the aft exhaust passage (102), optionally wherein:
the aft exhaust passage (102) defines a first air flow exit from the particle separator (58), and the open aft end (118) of the hollow cavity member (100) defines a second air flow exit from the particle separator (58); and/or
the hollow cavity member (100) includes a second portion (100B) disposed outside of the housing (96), and the second portion (100B) includes the open aft end (118); and/or
the particle separator (58) is configured to electrostatically motivate particles entrained within an air flow passing through the particle separator (58) to exit the particle separator (58) through the aft exhaust passage (102).

15. A method of handling particles entrained within an air flow passing through a combustor section (32) of a turbine engine (20), the combustor section (32) having an annular combustor (35) with an outer combustor wall (78), an inner combustor wall (80), and a combustion chamber (88) disposed between the outer combustor wall (78) and the inner combustor wall (80), wherein an outer casing (52) is disposed radially outside of and spaced apart from the annular combustor (35), and wherein a diffuser outer diameter flow path (62) is disposed radially between the outer casing (52) and the outer combustor wall (78), and wherein an inner diffuser case (60) is disposed radially inside of and spaced apart from the annular combustor (35), and wherein a diffuser inner diameter flow path (64) is disposed radially between the inner combustor wall (80) and the inner diffuser case (60), the method comprising:
using a particle separator (58) disposed within the diffuser outer diameter flow path (62) or the diffuser inner diameter flow path (64) to centrifugally separate particles entrained within the air flow and thereby form a first portion of the air flow possessing a first concentration of entrained particles and a second portion of the air flow possessing a second concentration of entrained particles, wherein the first concentration of entrained particles is greater than the second concentration of entrained particles;
directing the first portion of the air flow into the combustor combustion chamber (88); and
directing the second portion (100B) of the air flow back into the respective diffuser outer diameter flow path (62) or the diffuser inner diameter flow path (64), optionally further comprising electrostatically motivating the entrained particles within the air flow into the first portion of the air flow.
